# FASCICULE DE BREVET EUROPEEN

(11) **EP 2 729 752 B1**
(45) Date de publication et mention de la délivrance du brevet: **04.05.2016**
(21) Numéro de dépôt: 12735050.2
(22) Date de dépôt: 03.07.2012
(51) Int. Cl.: F28D 7/10, F28F 1/40, F28F 21/04, F28D 1/06, F28D 7/00

(54) **PROCÉDÉ POUR EXTRAIRE DE LA CHALEUR D'UN EFFLUENT CIRCULANT DANS UNE CONDUITE, EN PARTICULIER D'EAUX USÉES, ÉCHANGEUR DE CHALEUR ET MATÉRIAU POUR METTRE EN OEUVRE CE PROCÉDÉ**
VERFAHREN ZUR EXTRAKTION VON WÄRME AUS ABWASSER, INSBESONDERE VON IN EINER LEITUNG ZIRKULIERENDEM ABWASSER, WÄRMETAUSCHER UND MATERIAL ZUR UMSETZUNG DES VERFAHRENS
METHOD FOR EXTRACTION HEAT FROM AN EFFLUENT, ESPECIALLY WASTE WATER, CIRCULATING IN A CONDUIT, HEAT EXCHANGER AND MATERIAL FOR IMPLEMENTING SAID METHOD

(30) Priorité: 06.07.2011 FR 1156085
(43) Date de publication de la demande: 14.05.2014
(73) Titulaire: Lyonnaise des Eaux France, 92040 Paris (FR)
(72) Inventeur: DUONG, Frédéric, F-66370 Pezilla-la-Rivière (FR)
(74) Mandataire: Cabinet Armengaud Aîné
(86) Numéro de dépôt international: PCT/IB2012/053373
(87) Numéro de publication internationale: WO 2013/005161

(56) Documents cités:
- EP-A2- 1 215 460
- DE-A1- 3 607 207
- GB-A- 1 424 532
- JP-A- 2 302 508
- US-A- 4 379 870
- US-A1- 2002 025 248
- CHEMICAL ABSTRACTS, CHEMICAL ABSTRACTS SERVICE (C A S), US, 1 juillet 1991 (1991-07-01), XP000252303, ISSN: 0009-2258

## Description

L'invention est relative à un procédé pour extraire de la chaleur d'un effluent circulant dans une conduite, notamment un collecteur d'eaux usées, procédé selon lequel on installe, au moins dans le fond de la conduite, un échangeur de chaleur qui baigne dans l'effluent, cet échangeur de chaleur étant formé par enrobage de tubes avec un béton suffisamment conducteur de la chaleur coulé autour des tubes destinés à la circulation d'un fluide caloporteur, l'échange calorifique avec l'effluent de la conduite s'effectuant au travers de l'enrobage moulé.

Les collecteurs ou conduites d'évacuation d'eaux usées transportent des eaux sales qui sont tièdes ou tempérées du fait de leur provenance résidentielle ou tertiaire, ou de leur provenance d'activité collective ou industrielle. Leur température est généralement comprise entre 15 et 20°C.

La chaleur sensible de ces eaux représente une source d'énergie qui peut être récupérée pour des besoins de chauffage de bâtiment, de production d'eau chaude sanitaire, ou toute autre utilisation thermique, en combinaison avec une pompe à chaleur.

DE 35 21 285 et EP 1 215 460, qui peut être considéré comme l'état de la technique le plus proche, montrent des collecteurs d'eaux usées avec échangeur de chaleur noyé dans la paroi en béton du collecteur. De tels échangeurs sont d'un prix de revient avantageux, au point de vue fabrication et mise en oeuvre, par rapport à des échangeurs de chaleur réalisés en pièces métalliques. Toutefois, la transmission de chaleur à travers le béton demande à être améliorée, de même que la résistance mécanique de cet échangeur qui peut avoir à supporter le piétinement de personnels de service.

L'invention a pour but, surtout, de proposer un procédé qui permet d'obtenir un échangeur du genre en question dans lequel l'effet conducteur thermique et la solidité de l'échangeur sont simultanément améliorés.

Selon l'invention, le procédé pour extraire de la chaleur d'un effluent circulant dans une conduite, notamment un collecteur d'eaux usées, du genre défini précédemment, est caractérisé en ce que le béton de l'enrobage est composé d'au moins 50 % en masse de carbure de silicium, d'une charge en aiguilles d'un matériau conducteur de la chaleur et résistant mécaniquement, d'un liant et du complément en alumine, en poudre métallique ou en carbone.

La charge en aiguilles est de préférence supérieure à 2 % en masse. Les aiguilles peuvent être métalliques, en particulier en acier au carbone ou en aluminium, ou peuvent être en carbone. Le diamètre des aiguilles est de préférence inférieur à cinq dixièmes de millimètres, et la longueur des aiguilles est de préférence inférieure à 10 mm.

Avantageusement, une couche de matériau thermiquement isolant est placée entre les tubes et la paroi de la conduite ; une couche de béton conducteur est placée au contact des tubes, entre les tubes et l'effluent ; et, en surface, une couche de matériau résistant à l'abrasion est placée au contact de l'effluent.

Une résille intermédiaire, métallique ou en fibres synthétiques, peut être déployée au-dessus des tubes, avant coulage du matériau d'enrobage, sur toute l'étendue d'une portion de l'échangeur afin de renforcer la résistance mécanique et/ou améliorer le transfert thermique.

Les tubes peuvent être annelés. Avantageusement, les tubes sont en matière plastique. Ces tubes sont de préférence flexibles.

L'invention est également relative à un échangeur pour extraire de la chaleur à partir d'un effluent circulant dans une conduite, notamment un collecteur d'eaux usées, installé au moins dans le fond de la conduite pour baigner dans l'effluent, l'échangeur étant constitué de tubes noyés dans un béton conducteur de la chaleur coulé autour des tubes destinés à la circulation d'un fluide caloporteur, l'échange calorifique avec l'effluent de la conduite s'effectuant au travers de l'enrobage moulé, caractérisé en ce que le béton de l'enrobage est composé d'au moins 50% en masse de carbure de silicium, d'une charge en aiguilles d'un matériau conducteur de la chaleur et résistant mécaniquement, d'un liant et du complément en alumine, en poudre métallique ou en carbone.

De préférence, les tubes noyés dans le béton sont des tubes annelés. Les tubes noyés dans le béton peuvent être en matière plastique. Ces tubes peuvent être flexibles.

Avantageusement, la charge du béton en aiguilles est d'au moins 2 % en masse, et les aiguilles sont de préférence des aiguilles métalliques, en particulier en acier au carbone ou en aluminium, ou en carbone. Généralement, le liant est constitué par du ciment.

L'échangeur est réalisé de préférence selon le procédé défini précédemment.

L'invention est également relative à l'utilisation d'un matériau pour la mise en oeuvre du procédé défini précédemment, ce matériau étant caractérisé en ce qu'il est constitué d'un mélange composé d'au moins 50 % en masse de carbure de silicium, d'une charge en aiguilles d'un matériau conducteur de la chaleur et résistant mécaniquement, d'un liant et du complément en alumine, en poudre métallique ou en carbone.

Avantageusement, la charge en aiguilles est d'au moins 2 % en masse. Les aiguilles peuvent être métalliques, en particulier en acier au carbone ou en aluminium, ou être en carbone.

La conductivité thermique du matériau d'enrobage selon l'invention est sensiblement améliorée par le carbure de silicium qui présente une conductivité thermique élevée. Le carbure de silicium, combiné à de l'alumine et à un liant conduit à un type de béton facile à mettre en oeuvre.

Le béton d'enrobage utilisée dans le procédé de l'invention consiste en une combinaison qui permet d'obtenir un composite présentant une cohérence et une tenue mécanique. La conductivité thermique de l'alumine, plus élevée que celle d'un béton classique, permet d'obtenir une conductivité du composite plus élevée que celle d'un mélange impliquant du béton usuel.

La charge en aiguilles ajoutée à la combinaison de carbure de silicium et d'alumine permet d'améliorer la tenue mécanique du mélange de carbure de silicium-alumine, mais aussi sa conductivité thermique en créant des ponts thermiques qui facilitent le passage du flux de chaleur.

Les propriétés mécaniques du mélange obtenu, et notamment sa grande résistance mécanique, permettent sa mise en oeuvre dans des environnements soumis à de fortes contraintes comme, par exemple, le passage d'un opérateur muni de bottes cloutées ou la chute d'un outil d'une hauteur d'homme.

Les exemples de réalisation sont décrits sur ces dessins :
Fig. 1 est une section droite d'un collecteur d'eaux usées équipé dans la partie inférieure d'un échangeur selon l'invention.
Fig. 2 est une section droite d'un collecteur d'eaux usées, avec partie inférieure détériorée, avant mise en place d'un échangeur selon l'invention.
Fig. 3 est une coupe partielle à plus grande échelle d'une variante de réalisation, et
Fig.4 est une coupe schématique partielle longitudinale d'un tube annelé enrobé, d'un échangeur selon l'invention.

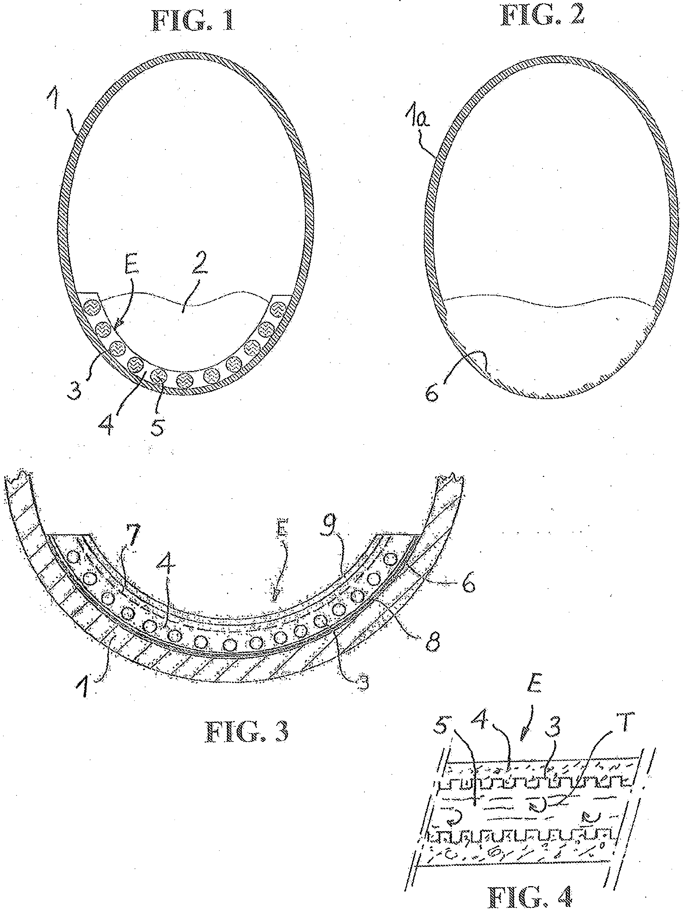

En se reportant aux dessins, notamment à Fig. 1, on peut voir une canalisation 1 formant collecteur d'eaux usées 2 en écoulement à surface libre. Dans la partie inférieure de la canalisation 1 est installé un échangeur de chaleur E qui baigne dans l'effluent constitué par les eaux usées 2.

L'échangeur E est moulé et constitué de nappes de tubes 3 souples, flexibles, de préférence annelés, ou éventuellement lisses, qui sont disposés parallèlement entre eux et à la direction longitudinale de la conduite. Sur les tubes 3 est coulé in situ le béton conducteur 4 qui, après solidification, assurera une double fonction de protection mécanique et d'échange thermique. Les tubes 3 peuvent être semi-rigides 3, métalliques.

Les tubes 3 n'ont pas besoin de présenter une tenue mécanique intrinsèque ; ils doivent permettre au fluide caloporteur 5 de circuler sans risque de fuite avec un échange calorifique optimisé. En cela les tubes annelés en matériau plastique (polychlorure de vinyle PVC, polyéthylène PE ou autre) permettent d'augmenter à la fois la surface d'échange (environ 20%) et surtout le coefficient d'échange superficiel interne du fait du régime d'écoulement turbulent provoqué par le profil des tubes annelés, et schématisé sur Fig.4.

Le béton 4 de l'enrobage des tubes est composé d'au moins 50 % en masse de carbure de silicium, d'une charge en aiguilles d'un matériau conducteur de la chaleur et résistant mécaniquement, d'un liant et du complément en alumine. Le liant est généralement constitué par du ciment.

La teneur en carbure de silicium peut atteindre 90 % en masse. La charge en aiguilles est de préférence d'au moins 2 % en masse.

Les aiguilles de la charge sont de préférence métalliques, ou en carbone. Les aiguilles métalliques sont avantageusement réalisées en acier au carbone ou en aluminium.

Le diamètre des aiguilles est en général inférieur à cinq dixièmes de millimètres pour une longueur généralement inférieure à 10 mm.

La conductivité thermique du béton selon l'invention est considérablement améliorée par rapport à celle d'un béton classique et, simultanément, la résistance mécanique du béton, notamment en surface, est fortement améliorée par la présence des aiguilles.

Le béton conducteur 4 selon l'invention présente une excellente résistance à la compression et à l'érosion, une bonne conductivité et une augmentation du coefficient d'échange superficiel côté fluide et côté eaux usées.

L'échangeur de chaleur sur eaux usées est mis en oeuvre dans la partie inférieure des conduites et est recouvert par l'écoulement à surface libre d'eaux usées selon le schéma de Fig. 1.

Le système d'échange thermique est constitué de deux parties distinctes :
- une couche d'un mélange conducteur 4 de carbure de silicium, d'alumine et d'aiguilles, notamment d'aiguilles ferritiques, qui vient tapisser le fond de la canalisation 1 et épouser sa forme,
- un réseau de tubes 3, en particulier de tubes annelés en matière plastique, emprisonnés dans cette couche de matériau conducteur 4.

Les calories contenues dans les eaux usées 2 sont ainsi transférées vers le fluide caloporteur 5 circulant dans les tubes 3, via le matériau conducteur 4 et les tubes 3.

L'utilisation de tubes annelés 3 permet, non seulement d'augmenter la surface d'échange entre le matériau conducteur 4 et les tubes 3, mais aussi une création de turbulences T (Fig.4) dans le fluide caloporteur 5 circulant dans les tubes 3, ce qui améliore les conditions d'échange sur la paroi interne des tubes 3.

La combinaison du béton conducteur et de tubes 3 annelés, noyés dans le béton, permet d'obtenir une bonne liaison mécanique entre béton et tubes grâce à la succession d'anneaux des tubes 3. De plus, l'échange thermique est favorisé non seulement par les propriétés du béton, mais aussi par l'effet du tuyau annelé augmentant la surface d'échange et créant un régime d'écoulement turbulent pour le fluide caloporteur 5.

L'échangeur de chaleur E est divisé en portions, suivant la direction d'écoulement des eaux usées, dont la taille sera ajustée de sorte que le fluide caloporteur 5 se réchauffe d'environ 4°C, notamment de 4°C à 8°C. Pour chaque portion d'échangeur, des collecteurs (non représentés) alimentent les tubes 3 en fluide caloporteur froid. Après passage dans l'échangeur de chaleur E, le fluide caloporteur réchauffé est dirigé, via d'autres collecteurs (non représentés) vers une pompe à chaleur. Le fluide caloporteur circule en circuit fermé. L'équilibrage hydraulique de l'ensemble est avantageusement réalisé grâce à une boucle de Tichelmann.

Le béton conducteur conforme à l'invention peut être mis en oeuvre par projection contre la paroi intérieure de la canalisation 1, ce qui réduit considérablement le temps de pose et la complexité de l'opération, par rapport à une solution mettant en oeuvre un échangeur en acier inoxydable.

La solution de l'invention s'adapte à toute géométrie de canalisation et peut être mise en oeuvre par des équipes ayant les compétences nécessaires à l'utilisation d'un béton classique.

De par la composition des eaux usées, les canalisations sont soumises à des contraintes qui engendrent une usure particulièrement prononcée de leurs parties inférieures immergées.

En plus de permettre la création d'une solution d'échange de chaleur sur eaux usées, le nouveau matériau selon l'invention présente l'avantage de permettre une réfection d'une canalisation 1a (Fig. 2) dont la partie inférieure 6 est détériorée. Au lieu du remplacement d'une conduite usée, la mise en place d'un échangeur de chaleur E selon l'invention, sur la partie inférieure de la canalisation 1a, permet une réfection de cette conduite grâce au béton conducteur qui viendra tapisser le fond de celle-ci.

La résistance mécanique élevée du mélange protège le système d'échange thermique de tout dommage et permet la compatibilité de celui-ci avec toutes les méthodes de curage des collecteurs d'eaux usées.

Pour la réalisation de l'échangeur, les tubes 3 sont préalablement fixés, par tout moyen approprié, contre la surface interne de la paroi de la canalisation 1. Le béton d'enrobage 4 est ensuite coulé, de préférence projeté, autour des tubes 3 pour durcir sur place.

Un film de protection 6, notamment une feuille de matière plastique, peut être prévue entre la surface intérieure de la conduite 1 et l'échangeur E intégré dans cette conduite.

Une résille intermédiaire 7, notamment métallique ou en fibres synthétiques, est avantageusement déployée au-dessus des tubes 3, sur toute la longueur de chaque portion d'échangeur E, suivant la direction d'écoulement des eaux usées, de manière à recouvrir la totalité de la nappe de tubes 3. La résille 7 renforce la résistance mécanique. Cette résille 7, lorsqu'elle est réalisée en un matériau conducteur thermique, notamment métallique, contribue à améliorer le transfert thermique.

Comme illustré selon la variante de Fig.3, l'enrobage des tubes 3 peut être réalisé en plusieurs couches de matériaux de propriétés différentes, à savoir :
- une couche 8 d'un matériau thermiquement isolant entre les tubes 3 et la paroi de la conduite 1, ou entre les tubes 3 et le film 6 lorsqu'un tel film est prévu ;
- une couche de béton conducteur 4 selon l'invention au contact des tubes, entre les tubes 3 et l'effluent et,
- en surface, une couche éventuelle 9 de matériau résistant à l'érosion.

Il est à noter que l'augmentation de la résistance mécanique du béton conducteur permet de réduire l'épaisseur de la couche de béton entre les tubes 3 et les eaux usées, ce qui est également favorable aux échanges thermiques, et se combine avec l'amélioration de la conductivité thermique.

Afin de dimensionner les caractéristiques physiques de l'échangeur moulé E en fonction des paramètres de fonctionnement : Puissance calorifique, température et débit du fluide caloporteur et des effluents, dimensions des conduits, profil en travers, surface développée, nombre de tubes et espacement, vitesse des fluides, etc.., une modélisation thermique et méca-fluide sera réalisée pour chaque projet.

A l'issue de la mise en service, des essais de performances in situ permettront d'affiner les paramètres de calcul pour optimiser les installations suivantes.

La mise en oeuvre de l'échangeur est rapide, elle ne nécessite pas de moyen de manutention important.
- La conduite 1 est vidée, nettoyée à la lance sous haute pression (éventuellement avec du sable additionnel), et une peinture d'accroche est pulvérisée sur la surface qui recevra l'échangeur.
- Les nappes de tubes 3 souples enroulés sur un dévidoir cylindrique sont introduites au fond de la conduite et fixées au niveau de râteliers d'espacement des tubes 3.
- A l'issue de la mise en place des nappes de tubes 3 une épreuve à l'air comprimé ou à l'eau permet de détecter des fuites éventuelles et de procéder à une réparation rapide (manchon de raccordement).
- La préparation du béton conducteur : ciment + SiC + eau + adjuvant est réalisée à l'extérieur de la conduite (toupie ou malaxeur selon la quantité)
- Le ciment conducteur préparé sous une forme pâteuse (presque liquide) est coulé sur les tubes (à l'aide d'une pompe à béton en surface) puis vibré de manière à remplir toutes les cavités interstitielles et les anneaux des tubes 3.
- Les collecteurs de jonction sur les tubes situés aux extrémités de l'échangeur moulé peuvent être mis en place avant ou après coulage.
- Pour accélérer la prise du ciment, un adjuvant peut être incorporé au moment de la préparation.
- Afin d'augmenter la dureté de surface il est également possible d'incorporer une résine durcissante dans le mélange de la couche superficielle.

### Exemples comparatifs

En comparaison d'un échangeur de chaleur sur eaux usées constitué de modules en acier inoxydable, la surface d'échange nécessaire avec un béton conducteur selon l'invention est environ équivalente. Cependant, la difficulté de mise en oeuvre, et le temps de mise hors service du collecteur pour réaliser l'échangeur sont fortement réduits.

Par rapport à une solution utilisant un béton classique pour enrober les tubes, la solution utilisant le béton conducteur selon l'invention nécessite une surface d'échange réduite d'un facteur de l'ordre de quatre.

Des essais effectués avec le béton conducteur selon l'invention, à 90 % en masse de carbure de silicium (SiC), ont donné une conductivité thermique de 72 W/m.°K. Pour un béton classique, la conductivité thermique est de l'ordre de 1,4 W/m.°K. Pour un échangeur en acier inoxydable, la conductivité thermique est de l'ordre de 16 W/m.°K. L'amélioration apportée par la solution de l'invention est donc considérable.

La conception de l'échangeur moulé de l'invention répond aux principaux critères techniques et économiques suivants :
- Maximiser l'échange calorifique entre l'eau qui circule dans le conduit des eaux usées et le fluide caloporteur du circuit fermé qui est relié à l'évaporateur de la pompe à chaleur.
- Minimiser le coût de fabrication et de mise en oeuvre du dispositif.
- Fiabiliser, l'équipement, éviter tout risque de fuite et permettre une réparation rapide en cas d'accident localisé.
- Réduire le délai d'intervention pour le montage in situ.

Le choix pour les tubes 3 peut se porter sur des tubes souples annelés utilisés dans des applications thermiques pour le chauffage ambiant de serres maraîchères. Des tubes souples de plancher chauffant pourraient être également utilisés.

L'excellente performance de l'échangeur moulé est assujettie à la conductivité du matériau d'enrobage et à la surface d'échange entre les tubes 3 caloporteurs et le matériau qui est supérieure à celle d'une surface plane puisque le flux de chaleur transite par conductivité sur toute la surface des tubes y compris dans leur face inférieure.

La tenue mécanique du matériau d'enrobage des tubes permet de limiter son épaisseur et il est possible d'effectuer des réfections de la surface dans les zones qui présenteraient une érosion à l'issue de nombreuses années d'exploitation.

La surface de l'échangeur moulé en contact avec les eaux usées a de préférence un profil en travers curviligne de manière à ce que la vitesse d'écoulement reste maximale lorsque le débit d'eau est faible.

L'échange calorifique sur la surface non immergée de l'échangeur moulé sera significatif, car la chaleur sera récupérée dans l'air tiède saturé qui règne dans la conduite d'eau usée. La chaleur latente de condensation de l'air augmente l'efficacité énergétique de l'échangeur en période de faible débit d'eau usée.

La fiabilité de l'échangeur moulé est du même ordre que celle des millions de m2 de plancher chauffant installés dans les secteurs résidentiel, tertiaire et industriel.

Le coût de fabrication d'un échangeur moulé est très inférieur à celui d'un échangeur construit en module d'acier inox assemblé mécaniquement Le coût de mise en oeuvre sur site serait d'environ la moitié et le délai de réalisation également réduit.

Le coût d'entretien sera minime, car les matériaux sont imputrescibles et la réparation de la surface de l'échangeur envisageable à l'issue de nombreuses années d'exploitation.

L'impact environnemental de construction et de déconstruction est limité, car cette technologie peut faire appel à des matériaux essentiellement recyclés : tubes, SiC broyé, etc.

L'association de tubes flexibles annelés et d'un matériau conducteur à base de SiC permet de réaliser un échangeur de chaleur à la fois performant et économique.

## Revendications

1. Procédé pour extraire de la chaleur d'un effluent (2) circulant dans une conduite (1), notamment un collecteur d'eaux usées, selon lequel on installe, au moins dans le fond de la conduite, un échangeur de chaleur (E) qui baigne dans l'effluent, l'échangeur de chaleur (E) étant formé par enrobage de tubes (3) avec un béton suffisamment conducteur de la chaleur coulé autour des tubes destinés à la circulation d'un fluide caloporteur, l'échange calorifique avec l'effluent de la conduite s'effectuant au travers de l'enrobage moulé, **caractérisé en ce que** le béton de l'enrobage est composé d'au moins 50% en masse de carbure de silicium, d'une charge en aiguilles d'un matériau conducteur de la chaleur et résistant mécaniquement, d'un liant et du complément en alumine, en poudre métallique ou en carbone..

2. Procédé selon la revendication 1, **caractérisé en ce que** la charge en aiguilles est supérieure à 2 % en masse.

3. Procédé selon la revendication 1 ou 2, **caractérisé en ce que** les aiguilles de la charge sont métalliques, en particulier en acier au carbone ou en aluminium, ou sont en carbone.

4. Procédé selon l'une quelconque des revendications précédentes, **caractérisé en ce que** le diamètre des aiguilles est inférieur à cinq dixièmes de millimètres pour une longueur généralement inférieure à 10 mm.

5. Procédé selon l'une quelconque des revendications précédentes, **caractérisé en ce que** les aiguilles sont des aiguilles ferritiques.

6. Procédé selon l'une quelconque des revendications précédentes, **caractérisé en ce que** :
- une couche (8) de matériau thermiquement isolant est placée entre les tubes (3) et la paroi de la conduite (1),
- une couche de béton conducteur (4) est placée au contact des tubes, entre les tubes et l'effluent,
- et, en surface, une couche (9) de matériau résistant à l'abrasion est placée au contact de l'effluent.

7. Procédé selon l'une quelconque des revendications précédentes, **caractérisé en ce qu'**une résille intermédiaire (7), métallique ou en fibres synthétiques, est déployée au-dessus des tubes (3), avant coulage du matériau d'enrobage, sur toute l'étendue d'une portion de l'échangeur afin de renforcer la résistance mécanique et/ou améliorer le transfert thermique.

8. Procédé selon l'une quelconque des revendications précédentes, **caractérisé en ce que** les tubes (3) sont annelés.

9. Procédé selon l'une quelconque des revendications précédentes, **caractérisé en ce que** les tubes (3) sont en matière plastique.

10. Procédé selon l'une quelconque des revendications précédentes, **caractérisé en ce que** les tubes (3) sont flexibles.

11. Echangeur pour extraire de la chaleur à partir d'un effluent circulant dans une conduite, notamment un collecteur d'eaux usées, installé au moins dans le fond de la conduite pour baigner dans l'effluent, l'échangeur étant constitué de tubes (3) noyés dans un béton conducteur de la chaleur coulé autour des tubes destinés à la circulation d'un fluide caloporteur, l'échange calorifique avec l'effluent de la conduite s'effectuant au travers de l'enrobage moulé, **caractérisé en ce que** le béton (4) de l'enrobage est composé d'au moins 50% en masse de carbure de silicium, d'une charge en aiguilles d'un matériau conducteur de la chaleur et résistant mécaniquement, d'un liant et du complément en alumine, en poudre métallique ou en carbone.

12. Echangeur selon la revendication 11, **caractérisé en ce que** les tubes (3) noyés dans le béton sont des tubes annelés.

13. Echangeur selon la revendication 11 ou 12, **caractérisé en ce que** les tubes (3) annelés sont en matière plastique.

14. Echangeur selon l'une quelconque des revendications 11 à 13, **caractérisé en ce que** les tubes (3) sont flexibles.

15. Utilisation d'un matériau pour la mise en oeuvre d'un procédé selon l'une quelconque des revendications 1 à 10, **caractérisé en ce qu'**il est constitué d'un mélange composé d'au moins 50 % en masse de carbure de silicium, d'une charge en aiguilles d'un matériau conducteur de la chaleur et résistant mécaniquement, d'un liant et du complément en alumine, en poudre métallique ou en carbone..

16. Utilisation d'un matériau selon la revendication 15, **caractérisé en ce que** la charge en aiguilles est d'au moins 2 % en masse.

17. Utilisation d'un matériau selon la revendication 15 ou 16, **caractérisé en ce que** et les aiguilles sont métalliques, en particulier en acier au carbone ou en aluminium, ou sont en carbone.

## Patentansprüche

1. Verfahren zum Extrahieren von Wärme aus Abwasser (2), das in einem Kanal (1), insbesondere einem Abwassersammler, fließt, bei welchem zumindest im Boden des Kanals ein Wärmetauscher (E) eingebaut wird, der in dem Abwasser eingetaucht ist, wobei der Wärmetauscher (E) durch Ummanteln von Rohren (3) mit einem ausreichend wärmeleitfähigen Beton, der um Rohre gegossen wird, die dem Zirkulieren eines Wärmeträgerfluids dienen, hergestellt ist, wobei der Wärmeaustausch mit dem Abwasser des Kanals über die gegossene Ummantelung erfolgt,
**dadurch gekennzeichnet, dass**
der Beton der Ummantelung zu mindestens 50 Masseprozent aus Siliziumcarbid, einem Füllstoff aus Nadeln eines wärmeleitfähigen und mechanisch widerstandsfähigen Materials, einem Bindemittel und einem Zuschlag aus Aluminiumoxid, Metallpulver oder Kohlenstoff besteht.

2. Verfahren nach Anspruch 1, **dadurch gekennzeichnet, dass** der Nadelfüllstoff einen Massenanteil von mehr als 2% aufweist.

3. Verfahren nach Anspruch 1 oder 2, **dadurch gekennzeichnet, dass** die Nadeln des Füllstoffs aus Metall, insbesondere aus Kohlenstoffstahl oder Aluminium, oder aus Kohlenstoff bestehen.

4. Verfahren nach einem der vorhergehenden Ansprüche, **dadurch gekennzeichnet, dass** der Durchmesser der Nadeln kleiner als fünf Zehntel Millimeter bei einer Länge beträgt, die im Allgemeinen geringer als 10 mm ist.

5. Verfahren nach einem der vorhergehenden Ansprüche, **dadurch gekennzeichnet, dass** die Nadeln ferritische Nadeln sind.

6. Verfahren nach einem der vorhergehenden Ansprüche, **dadurch gekennzeichnet, dass**:
- eine Schicht (8) aus thermisch isolierendem Material zwischen den Rohren (3) und der Wand des Kanals (1) angeordnet wird,
- eine Schicht (4) leitfähigen Betons in Kontakt mit den Rohren zwischen den Rohren und dem Abwasser angeordnet wird,
- und an der Oberfläche eine Schicht (9) aus abriebfestem Material in Kontakt mit dem Abwasser angeordnet wird.

7. Verfahren nach einem der vorhergehenden Ansprüche, **dadurch gekennzeichnet, dass** zwischengefügtes Netz (7) aus Metall oder Kunstfasern vor dem Gießen des Ummantelungsmaterials über die gesamte Erstreckung eines Bereichs des Tauschers über den Rohren (3) ausgelegt wird, um die mechanische Festigkeit zu verstärken und/oder die Wärmeübertragung zu verbessern.

8. Verfahren nach einem der vorhergehenden Ansprüche, **dadurch gekennzeichnet, dass** die Rohre (3) gewellt sind.

9. Verfahren nach einem der vorhergehenden Ansprüche, **dadurch gekennzeichnet, dass** die Rohre (3) aus Kunststoff bestehen.

10. Verfahren nach einem der vorhergehenden Ansprüche, **dadurch gekennzeichnet, dass** die Rohre (3) flexibel sind.

11. Tauscher zum Extrahieren von Wärme aus Abwasser, das in einem Kanal, insbesondere einem Abwassersammler, fließt, wobei der Tauscher zumindest im Boden des Kanals eingebaut ist, um in dem Abwasser eingetaucht zu sein, wobei der Tauscher durch Rohre (3) gebildet ist, welche in einen wärmeleitfähigen Beton eingebettet sind, der um Rohre gegossen ist, die dem Zirkulieren eines Wärmeträgerfluids dienen, wobei der Wärmeaustausch mit dem Abwasser des Kanals über die gegossene Ummantelung erfolgt,
**dadurch gekennzeichnet, dass** der Beton (4) der Ummantelung zu mindestens 50 Masseprozent aus Siliziumcarbid, einem Füllstoff aus Nadeln eines wärmeleitfähigen und mechanisch widerstandsfähigen Materials, einem Bindemittel und einem Zuschlag aus Aluminiumoxid, Metallpulver oder Kohlenstoff besteht.

12. Tauscher nach Anspruch 11, **dadurch gekennzeichnet, dass** die in den Beton eingebetteten Rohre (3) Wellrohre sind.

13. Tauscher nach Anspruch 11 oder 12, **dadurch gekennzeichnet, dass** die Wellrohre (3) aus Kunststoff bestehen.

14. Tauscher nach einem der Ansprüche 11 bis 13, **dadurch gekennzeichnet, dass** die Rohre (3) flexibel sind.

15. Verwendung eines Materials zur Durchführung eines Verfahrens nach einem der Ansprüche 1 bis 10, **dadurch gekennzeichnet, dass** es aus einer Mischung besteht, die zu mindestens 50 Masseprozent aus Siliziumcarbid, einem Füllstoff aus Nadeln eines wärmeleitfähigen und mechanisch widerstandsfähigen Materials, einem Bindemittel und einem Zuschlag aus Aluminiumoxid, Metallpulver oder Kohlenstoff besteht.

16. Verwendung eines Materials nach Anspruch 15, **dadurch gekennzeichnet, dass** der Nadelfüllstoff einen Massenanteil von mehr als 2% aufweist.

17. Verwendung eines Materials nach Anspruch 15 oder 16, **dadurch gekennzeichnet, dass** die Nadeln aus Metall, insbesondere aus Kohlenstoffstahl oder Aluminium, oder aus Kohlenstoff bestehen.

## Claims

1. A method for extracting heat from an effluent (2) flowing along a pipe (1), notably a sewer, whereby there is installed, at least in the bottom of the pipe, a heat exchanger (E) which is immersed in the effluent, the heat exchanger (E) being formed by coating tubes (3) with a sufficiently thermally conductive concrete poured around tubes through which a heat-transfer fluid is intended to circulate, the exchange of heat with the effluent of the pipe taking place through the cast coating,
**characterized in that** the coating concrete is made up of at least 50% by weight of silicon carbide, of an acicular filler of needles of a thermally conductive and mechanically strong material, of a binder and the rest being alumina, metallic powder or carbon.

2. The method as claimed in claim 1, **characterized in that** the acicular filler of needles represents more than 2% by weight.

3. The method as claimed in claim 1 or 2,
**characterized in that** the needles of the acicular filler are made of metal, particularly of carbon steel or of aluminum, or are made of carbon.

4. The method as claimed in any one of the preceding claims, **characterized in that** the diameter of the needles is less than five-tenths of a millimeter for a length generally of less than 10 mm.

5. The method as claimed in any one of the preceding claims, **characterized in that** the needles are ferritic needles.

6. The method as claimed in any one of the preceding claims, **characterized in that**:
- a layer (8) of thermally insulating material is placed between the tubes (3) and the wall of the pipe (1),
- a layer of conductive concrete (4) is placed in contact with the tubes, between the tubes and the effluent,
- and, at the surface, a layer (9) of abrasion-resistant material is placed in contact with the effluent.

7. The method as claimed in any one of the preceding claims, **characterized in that** an intermediate mesh (7) made of metal or synthetic fibers is spread over the tubes (3), prior to the pouring of the coating material, over the entire extent of a portion of the exchanger so as to enhance mechanical strength and/or improve heat transfer.

8. The method as claimed in any one of the preceding claims, characterized i-n that the tubes (3) are ringed.

9. The method as claimed in any one of the preceding claims, **characterized in that** the tubes (3) are made of plastic.

10. The method as claimed in any one of the preceding claims, **characterized in that** the tubes (3) are flexible.

11. An exchanger for extracting heat from an effluent flowing along a pipe, notably a sewer, installed at least in the bottom of the pipe so that it is immersed in the effluent, the exchanger being made up of tubes (3) embedded in a thermally conductive concrete poured around tubes through which a heat-transfer fluid is intended to circulate, the exchange of heat with the effluent of the pipe taking place through the cast coating,
**characterized in that** the coating concrete (4) is made up of at least 50% by weight of silicon carbide, of an acicular filler of needles of a thermally conductive and mechanically strong material, of a blinder, the rest being alumina, metallic power or carbon.

12. The exchanger as claimed in claim 11,
**characterized in that** the tubes (3) embedded in the concrete are ringed tubes.

13. The exchanger as claimed in claim 11 or 12,
**characterized in that** the ringed tubes (3) are made of plastic.

14. The exchanger as claimed in any one of claims 11 to 13, **characterized in that** the tubes (3) are flexible.

15. A material for implementing a method as claimed in any one of claims 1 to 10, **characterized in that** it consists of a mixture made up of at least 50% by weight of silicon carbide, of an acicular filler of needles of a thermally conductive and mechanically strong material, of a binder, the rest being alumina, metallic powder or carbon.

16. Use of a material as claimed in claim 15,
**characterized in that** the acicular filler of needles represents at least 2% by weight.

17. Use of a material as claimed in claim 15 or 16,
**characterized in that** and the acicular filler of needles are made of metal, particularly of carbon steel or of aluminium, or are made of carbon.
